(19) **European Patent Office**

Europäisches Patentamt

European Patent Office

Office européen des brevets

(11) **EP 1 002 881 A1**

(12) **EUROPEAN PATENT APPLICATION**
published in accordance with Art. 158(3) EPC

(43) Date of publication:
24.05.2000 Bulletin 2000/21

(51) Int. Cl.⁷: **C22B 1/16**, C21C 5/06, C21B 5/04

(21) Application number: 97948045.6

(22) Date of filing: 03.12.1997

(86) International application number:
PCT/RU97/00385

(87) International publication number:
WO 98/27237 (25.06.1998 Gazette 1998/25)

(84) Designated Contracting States:
**BE DE ES FI FR GB LU NL SE**

(30) Priority: 19.12.1996 RU 96123799
19.12.1996 RU 96123800

(71) Applicant:
**Babaev, Eduard Dantenovich**
**Moscow 117620 (RU)**

(72) Inventors:
• **BABAEV, Eduard Dantenovich**
**Moscow, 117620 (RU)**

• **KHAIDUKOV, Vladislav Pavlovich**
**Lipetsk, 398043 (RU)**
• **BABAEV, Marat Dantenovich**
**Moscow, 117620 (RU)**

(74) Representative:
**Andrae, Steffen, Dr. et al**
**Andrae Flach Haug**
**Balanstrasse 55**
**81541 München (DE)**

(54) **FERRITE- AND CALCIUM-BASED FLUX, MIXTURE FOR ITS PRODUCTION, AND USE THEREOF**

(57) Ferrite-calcium flux consisting of the oxides of elements included in iron-ore material and has a composition whose stoichiometric coefficient $\rho$ is 0.75 - 0.82 and its chemical equivalent $\Delta e$ is (-4.1) - (-1.92), with a $SiO_2$ content in flux is varied from I to 7 wt%.

Printed by Xerox (UK) Business Services
2.16.7 (HRS)/3.6

## Description

### Technical field

The invention relates to ferrous metallurgy, more specifically to using the iron-containing waste of metallurgical complex in the production of synthetic flux on a ferrite-calcium base for agglomeration, blast furnace and steel-smelting production.

### Prior art.

Ever more active attempts have repeatedly been made to involve a metallurgical complex in the metallurgical conversion of iron containing waste.

For example, known in the art is a process for iron smelting when for the regulation of a blast-furnace slag composition, the charge is added, together with an iron-ore portion, with ferroalloy-production slag having a basicity of $CaO/SiO_2$=1,15-1,65 .[ Kulikov Ya. P. "Pererabotka metallurgicheskikh shlakov na zavodakh Ukrainskoi SSR" (Conversion of metallurgical slags at the plants of the Ukrainian Socialist Republic), Express-information, Moscow, 1977].

A disadvantage of the process consists in that ferroalloy production slag reduces an iron content in furnace charge, increases a slag yield and results in increased coke consumption.

Also used in furnace charge is a converter slag in an amount from 50 to 70 kg/t of pig iron .[ Kulikov Ya. P. "Pererabotka metallurgicheskikh shlakov na zavodakh Ukrainskoi SSR", Express-information, Moscow, 1977]. However, in this particular case, a phosphorus content is increased in pig iron.

And as this is so, a moat popular process of blast furnace smelting is the use in charge, alongside an iron - containing portion, of raw limestone [ Danshin V,V., Chernousov P.I. " Spravochnik rabochego domennogo tsekha" (The guide of a blast furnace worker), Metallurgiya, 1989, p. 53-58]. This provides the possibility of slag being obtained with specified basicity but leads to an increased consumption of metallurgical coke and to a reduced production of blast furnaces.

In the production of synthetic flux for steel-smelting processes it is proposed [USSR Inventorship Certificate No 1257099; C 21 C 5/54; 5/28; published 15. 09. 86, Bulletin No 34] to use charge consisting of metallurgical production waste and containing converter dust, bauxite, dolomite, solid fuel and limestone with the following ratio of components, wt%

| converter dust | 20-25 |
| bauxite | 10-15 |
| dolomite | 15-20 |
| solid fuel | 8-10 |
| limestone | the balance |

The obtainable flux contains a mixture of oxides of the elements comprising iron ore material whose composition should meet the condition: $FeO / (SiO_2 + Al_2O_3) = 0,5 - 1,0$.

This flux (the closest analog ) contributes to actively forming a melt with a high assimilating capability toward lime, low viscosity and low melting temperature.

A disadvantage of the described flux and charge for its production is the fact the necessity to keep in the flux the ratio of $FeO/(SiO_2 + Al_2O_3)$ within the specified limits results in an increased consumption of solid fuel and an increased gas-dynamic sintering charge resistance down to the stopp age of the solid fuel combustion process.

The closest analog for the claimed charge is the one proposed for preparing steel-smelting flux [USSK Inventorship Certificate No 945209; C 22 B 1/24; published 23. 07. 82. Bulletin No 27] which contains, as a filler, limestone or dolomite having a coarseness of between 8 and 30 mm and, as a binding part a mixture of converter sludge, sinter, lime, limestone and fuel with a coarseness of between 0.1 and 2.0 mm providing for the total ratio of $CaO/Fe_2O_3$, in flux within the limits of between 1.0 and 4.0 and in bond - 0.3 and 0.4, with the following content of initial components in bond, wt%:

| lime | 15 - 20 |
|---|---|
| limestone or dolomite | 10-12 |
| fuel | 8-10 |
| converter sludge or sinter | the balance |

The use of said flux reduces a cooling effect of flux in a steel-smelting bath, it has an enhanced mechanical strength of lumps and is stable to hydration.

However, no role of silica is counted here, and this may lead to a sintering process being unsatisfactory because of a refractory bicalcium silicate high content in the minerals formed.

In the 70-s, E. Prikhodko developed a semiempirical theory SNIR [Prikhodko E. V. "Sistema nepolyarizovannykh ionykh radiusov i ispol'sovanie dlya analiza elektronnogo stroeniya i svoistv veshchestv" (The system of non-polarized ionic radii and its usage for analysis of electronic structure and properties of substances), Kiev, Naukova Dumka, 1973] which opened a possibility for prognosticating the composition and structure of substances with prescribed physico-chemical properties.

On the basis of this theory, the author has offered [ Prihodko E.V. "Metallokhimiya mnogokomponent system" (Metallic Chemistry of Multicomponent Systems), M. Metallurgiya, 1995 is included into description by referring to it] any multicomponent oxide composition to be considered as a chemically single system and, taking account of its complete make-up, to use integral model parameters p and $\Delta$e to assess composition-property connection, wherein:

$\Delta$e - is a chemical equivalent of the composition of a multiple-component melt being an integral characteristic of interaction of cations with anions,

$\rho$- is a stoichiometric coefficient showing a number of cations (Me) falling for one anion (E) in the given system (represented as Me$\rho$E).

It is hence only logical to see that within the bounds of the theory under consideration, for any multiple-component melt its properties, as a single chemical system, are defined by a combination of model parameters $\rho$ and $\Delta$e which characterize its chemical and structural state.

At the basis of a semiempirical approach to modelling metallurgical melts is a postulate to the effect that in condensed phases, the radii of real ions $R_u$ and their effective charges $Z_u$ do not remain invariable and are varied in relation to a distance d between the bond-forming atoms and a chemical individuality of neighbors and, along with this, a level of charge may be fractional.

The individuality of atoms is characterized by two initial model parameters - the radius of non-polarized (isolated) atom $R^o_u$ and its polarizable ability that is expressed by angular coefficient tg$\alpha$ from the equation $lgR_u = lgR^o_u - Z_u \cdot$ tg$\alpha$ .

Parameters $R^o_u$ and tg$\alpha$ depend on the position of elements in the Periodic System and are arranged by the author of the theory in a system of non-polarized ionic radii SNIR.

The real size of ions $R_u$ and their charges $Z_u$ are linked with an interatomic distance d in the following manner:

$$R^A_u + R^B_u = d \qquad (I)$$

$$lg\,R^A_u = lg\,Ru^0_A - (Z_{minA} + \Delta e/2\,tg\alpha_A)$$

$$lg\,R^B_u = lg\,Ru^0_B - (Z_{minB} + \Delta e/2\,tg\alpha_B)$$

wherein $Z_{minA}$ = - $Z_{minB}$ - "spherical" and $\Delta$e/2 - "specifically controlled" components of the effective charge $Z = Z_{min} + \Delta e/2$ .

Parameter $\Delta$e characterizes the disturbed spherical symmetry of electron clouds of the interacting atoms, i.e. characterizes the donor-acceptor bond capability as a whole. It determines part of electrons passing over from atomic orbitals to binding ones stretched out in the direction of A - B.

As a result of the numerical solution of system (1) are determined radii $R^A_u$, $R^B_u$ and $\Delta$e for each pair of atoms.

A multiple-component system is modelled by sorting out all the pair connections in relation to a melt structure by sequentially determining integral physico-chemical criteria through averaging parameters Δe, tga and a charge state as well. And each of the integral parameters is calculated as an additive value with the account of a probability of forming the pair connections of proportional concentration of the melt- producing components. Specified is the calculation of each atom interacting with the near and distant neighbours.

The proposed model of the electron structures of metallurgical slags is based on a description of conditions of an equilibrium of cationic and anionic sub-lattices with the aid of the following equations of stability:

$$Z_{E(E-Me)} - Z_{E(E-E)} = (Ru_{Me}/Ru_E - 0.485)/(6.067\ tg\alpha_E - 0.1927) + 0.275 \qquad (II)$$

$$Z_{Me(Me-E)} - Z_{Me(Me-Me)} = (Ru_E/Ru_{Me} - 0.53)/(15.43\ tg\alpha_{Me} - 1.5045) + 0.51$$

Here $Z_{E(E-Me)}$, $Z_{E(E-E)}$, $Z_{Me(Me-E)}$, $Z_{Me(Me-Me)}$, $Ru_{Me}$, $Ru_E$, - weighted average parameters of the charges and radii of ions in the cation (Me) and anion (E) bond.

From the cited system (II) the method of successive approximations determines $d_{Me-E}$ (included therein in implicit form) and distances Me - Me and E - E corresponding thereto.

Information obtained in solving the equations of a stability (II) provided the basis for developing a semi-empirical method for calculating the physico-chemical properties of melts.

We have already mentioned that on selecting a system of equations, the main task was to describe the principles of changing the physico-chemical properties of a melt in relation to a composition by introducing into the bond between the composition and the properties of an intermediate link - integral parameters $\rho$ and $\Delta e$ which define the chemical and structural state of the system.

Parameter $\Delta e$ is an integral characteristic of the interaction of cations and anions, i.e. the analog of the chemical equivalent of the composition of a multiple-component melt.

If an oxide melt is written as $A_nB_mC_{1-n-m}D_kE_{1-k}$ where A, B and C - cations and D and E - anions, the calculation equation for $\Delta e$ will be as follows:

$$\Delta e = \Delta e_{A-D}\ n\ k + \Delta e_{A-E}\ n\ (1-k) + ... + \Delta e_{C-E}\ (1-n-m)\ (1-k)$$

The calculation of stoichiometric coefficient $\rho$ of the system of a known composition is associated with converting the concentrations by weight of its components into the number of atoms Me and E of each and every compound in 100 g of a melt by sequentially determining the sum total of cations and anions and a ratio thereof.

E. Prikhodko has proposed to use said model parameters as a complex characterization of the chemical individuality of a concrete multiple-component composition and has derived on the basis of extensive experimental material the equations connecting the main physico-chemical properties of a system with the parameters under consideration which are abstracted from the concrete chemical composition. [ E. V. Prikhodko, A. P. Khamkhotko, D. N. Tagobitskaya "Stroenie i fizikokhimicheskie svoistva metallurgicheskikh shlakovykh rasplavov" (The structure and physico-chemical properties of metallurgical slag melts), Moscow, 1983. Express-information; Prihodko E.V. "Metallokhimiya mnogokomponent system". M. Metallurgiya, 1995.]

For example, derived are dependencies for viscosity ($\eta$) and surface tension ($\wp$) of a blast furnace melt

$$lg\eta_{1300} = 10,33 - 15,13\rho - 0,138\Delta e\ (H/c\ m^2)$$

$$lg\eta_{1400} = 7,7 - 11,23\ \rho - 0,043\ \Delta e$$

$$lg\eta_{1500} = 6,55 - 9,97\rho - 0,047\ \Delta e$$

a correlation coefficient r > 0.9

$$\wp_{1550-1600} = 606,18 - 67,04\rho + 39,73\ \Delta e\ r = 0,92$$

the changes of phosphorus concentration [P] and metal temperature ($T_{me}$) along the pathway of melting for oxygen-converter conversion (M. V. Touchina "'Technological peculiarities of pig iron conversion of various make-ups with the use of slag- forming materials" 1993 (Author's abstract of the dissertation)

$$[P] = 2,575 + 0,0037\ (MnO) - 4,453\rho - 0,399\ \Delta e\ r = 0,63$$

$$T_m = 1391 + 581,8\rho + 89,5\ \Delta e\ r = 0,48$$

The coupling equations based on Prikhodko's theory describe various metallurgical processes and provide for a sufficient level of accuracy for masses combining data of various production processes, a factor that testifies to universality of the principles obtained.

The main merit of the approach described consists in that it permits linearizing the complex dependencies of physico-chemical properties of multiple-component oxide systems on the composition

Prikhodko'a theory is currently used with great eclat in applied metallurgy, enabling one to predict the physico-chemical properties of a metallurgical oxide melt for any combination and ratio of components, for practical purposes with sufficient accuracy and with the use of model parameters $\rho$ and $\Delta e$ and also prognosticate a melt composition exhibiting the main properties required.

**Disclosure of the invention**

An object of invention is to obtain ferrite-calcium flux with specified physico-chemical properties and to reduce solid fuel consumption required for preparing same.

Said object is achieved in the following manner.

The claimed flux contains a mixture of the oxides of iron, calcium, magnesium, silicon and other elements included in iron ore material in such a ratio that the stoichiometric coefficient of the mixture $\rho$ is within the limits of from 0.75 to 0.82 and its chemical equivalent $\Delta e$, from (-4.1) to (-1.92) and, more importantly, a $SiO_2$ content in the mixture should not exceed 7%.

Our investigations go to show that only flux for which $\rho$ and $\Delta e$ fit into the above-mentioned limits, with the contained $SiO_2$ being not more than 7% has satisfactory physico-chemical characteristics. Departure of $\rho$ and/or $\Delta e$ from said limits and also $SiO_2$ being greater than 7% lead to worsening the mechanical strength of flux, its fluxing and assimilating ability and to increasing its fusing temperature and viscosity.

A charge for the claimed flux contains wastes or a mixture of wastes of metallurgical conversion, calcium - and magnesium - containing materials and solid fuel and the $Fe_{total}/SiO_2$ relation in the wastes or a mixture thereof should not be less than 11 and the contained $SiO_2$ should be between 0.5 and 5.0 wt%»

A charge composition for obtaining flux with a specified make-up, a $SiO_2$ content therein being within limits of between 1 and 7 wt%, is determined on the basis of observance of a material and thermal balance and, most importantly, the sum total of $Fe_{total}/SiO_2$ in the iron-containing waste is no less than 11, a SiO2 content being from 0.5 to 5 wt%.

With the total silicon oxide contained in iron-containing waste above 5 wt%, an agglomerating process is not carried out which is explained by a high degree of formation in a high -temperature zone of a difficultly fusible bicalcium silicate ($2CaO SiO_2$) and a reduction of the number of liquid phases owing to this fact.

The reduced $Fe_{total}/SiO_2$ relation in iron-containing waste likewise results in reducing the number of liquid phases and makes difficult the process of agglomeration.

The calcium- and magnesium-containing components used are normally represented by limestone, dolomitic limestone, dolomil or a mixture thereof.

The solution under consideration allows one to obtain synthetic flux on a ferrite-calcium base from production waste and along with this, depending on its prospective use, one can obtain precisely flux that will give the most favourable result in this particular case.

Thus, the claimed flux may, for example, be used as a slag -forming component in a converter process or in blast - furnace smelting.

We have shown that optinal for use in a converter will be flux having a composition whose stoichiometric coefficient $\rho$ is equal to 0.78 - 0.82 and the chemical equivalent $\Delta e$ is between (-4.1) and (-3.8).

And for blast-furnace smelting it is preferable to use flux whose $\rho$ is between 0.75 and 0.78 and $\Delta e$ is (-2.3) - (-1.92). Also if a flux composition meets the condition that $CaO/Fe_2O_3$ is 0.15 - 0.55 and the contained $Fe_{total}$ in flux is greater than 50 wt%, then its use in the composition of a blast-furnace charge enables one to obtain the required baciaity of slag without adding limestone and, at the same time, increase the content of non -fluxed pellets in the charge and/or high-strength iron-ore agglomerate having a bacisity of from 0.9 to 1.0.

A reduction of iron contained in flux diminishes a pig iron yield; a slag yield is increased from the unit of iron - ore materials, as is coke consumption.

And the use of flux with the disturbed ratio of $CaO/Fe_2O_3$ normally worsens gas-dynamic conditions in a furnace, a factor that leads to a reduction of its productivity. Preferred embodiments of the invention

**Preferred embodiments of the invention.**

The cited examples illustrate the claimed solution without restricting it.

In making calculations, we used a program developed in the Institute of Ferrous Metallurgy (Dnepropetrovsk city) on the basis of equations as mentioned hereinabove. The program enables one to calculate the main physico-chemical properties of an oxide solution in relation to its composition, using $\rho$ and $\Delta e$ as intermediate parameters.

Example 1

It is known that the economic indices of converter operation are greatly influenced by the properties of a ferrite-calcium melt such as viscosity ($\eta$), melting temperature ($T_{melt}$), assimilating ability (G).

Using accumulated experimental mass data for calculations we have shown that said properties have optimal values (0.06 -0.08 Pas, 1200 - 1300°C and 7.1 - 9.1 mg/cm$^2$ sec. respectively) for oxide melts, of which stoichiometric coefficient and chemical equivalent lie in the range of from 0.78 to 0.82 and (-4.1) - (-3.8) respectively, and the composition meets the following conditions (cited are basic oxides, wt%):

| | |
|---|---|
| $Fe_2O_3$. 33-42 | MgO 3-5 |
| FeO 10-12 | $SiO_2$ 3-7 |
| CaO 39-43 | |

The balance (normally about 3%) is made up of the oxides of Mn, Al and other elements included in iron - ore material.

A charge for obtaining flux consisted of converter sludge (in which $Fe_{total}/ SiO_2$ = 30, $SiO_2$= 2.0%), a mixture of limestone and dolomite (1:1) and solid fuel..

The calculation of initial components contained in charge was made on the basis of equations of a materials balance as to a solid product yield in sintering, in terms of iron, calcium and silicon.

The quantities of the required solid fuel were determined on the basis of heat needed in the process.

For a charge composition to be calculated, use was made of the averaged optimal values of a flux make-up: $Fe_2O_3$ 37%, FeO 11% [as calculated for $Fe_{total}$ 34.5%), Ca0 41%, $SiO_2$ 5%, MgO 4%.

The calculations have shown that the production of 1 ton of flux calls for (in kg):

| | |
|---|---|
| converter sludge | 400 |
| limestone/dolomite mixture (1: 1 ratio) | 800 |
| coke | 58 |

Ferrite-calcium flux being obtainable in sintering the charg of the given composition contained $Fe_{total}$ 32.7%, CaO 39.5%, $SiO_2$ 6.7%, MgO 3.9% (calculated model parameters $\rho$ = 0.8; $\Delta e$ =-3.9) and had $T_{melt}$ = 1210°C, viscosity 0.06Pas and assimilating ability 8.4 mg/cm$^2$ sec.

The results of use of obtainable flux in melting in 160-ton - capacity converters are given in Table1 1.

As can really be seen from said Table, the use of flux under consideration made it possible to intensify a process of slag-formation and to improve the main technico-economic indices of converter's work. Thus, a specific pig iron consumption has diminished by 17kg/t of steel owing to a reduction in loss of metal with slag, the reduction of a sparking process and sloppings; the time of oxygen purge has dropped from 15 to 14.5 minutes with the economy of lime of 7 kg/t of steel; and blast consumption has reduced from 55 to 50 m3/t of steel.

Example 2

The principal characteristics of flux, when used in a blast-furnace process are as follows: reductibility according to the method of A. N. Pokhvisnev (optimal values 42 - 46%); mechanical strength, the yield of fractions of over 5mm (GOST 15137-77 85-88%); softening temperature range $\Delta T$ 70 - 80°C , $T_{of\ the\ end\ of\ melting}$ 1250 - 1280°C).

TABLE 1

| Parameters | Flux inventorship Certificate N1257099 | Claimed flux |
|---|---|---|
| Specific pig iron consumption, kg/t of steel | 812 | 795 |
| Specific scrap consumption, kg/t of steel | 312 | 337 |
| Specific flux consumption, kg/t | 30,0 | 30,0 |
| Specific lime consumption, kg/t | 52,0 | 45,0 |
| Specific oxygen, flowrate , $m^3$/t | 55,0 | 50,0 |
| Pig iron composition(%): | | |
| Si | 0,65 | 0,65 |
| Mn | 0,65 | 0,11 |
| S | 0,023 | 0,025 |
| P | 0,011 | 0,011 |
| Pig iron temperature, °C | 1315 | 1340 |
| Metal composition turning-down (%): | | |
| C | 0,04 | 0,04 |
| Mn | 0,11 | 0,12 |
| S | 0,02 | 0,022 |
| P | 0,007 | 0,007 |
| Metal temperature, °C | 1645 | 1650 |
| Slag composition (%): | | |
| FeO | 16,5 | 16,0 |
| $SiO_2$ | 17,9 | 17,0 |
| CaO | 50,0 | 51,0 |
| MgO | 2,84 | 2,00 |
| CaO/$SiO_2$ | 2,79 | 3,00 |
| The time of purge, min. | 15,0 | 14,5 |

Calculations show that according to prognostications, such properties should be intrinsic in an oxide solution for which the parameters $\rho$ and $\Delta e$ will be [O.75 - 0.78] and [(-2.3) - (-1.92)], respectively, and the content of basic oxides fits into the following intervals (wt%):

| | |
|---|---|
| $Fe_2O_3$. 63-69 | MgO 4-6 |
| FeO 10-13 | $SiO_2$ 3-6 |
| CaO 10-16 | |

As stated already, at present, on conducting blast-furnace smelting, a slag-forming component most frequently used is represented by limestone. We have established that if use is made, on carrying out a blast-furnace smelting operation including iron ore materials, the slag-forming component and solid fuel being loaded into a blast furnace, as the slag-forming component regulating the bacisity of blast furnace slag, of not lime but ferrite-calcium flux in which [$CaO_2$]/$Fe_2O_3$] is 0.15 - 0.55, with the contained $SiO_2$ therein being from 1 to 7% and $Fe_{total}$ being greater than

7

50%, then the consumption of the coke required for melting is reduced and blast-furnace production indices improve.

To obtain flux of a desirable composition $Fe_2O_3$ 64%, FeO 13% [as calculated for $Fe_{total}$ 54.8%], Ca0 11%, $SiO_2$ 5.5%, MgO 5%. (CaO/ $Fe_2O_3$ 0.172; $\rho$ 0.76; $\Delta e$ (-2.1)) use waa made of a charge conaiating of dump aludge, acale, a mixture of limestone and dolomite (I: 1 ratio) and coke.

The concentration of $SiO_2$ in dump saludge - 6.57%, in scale - 1.89%. $Fe_{total}$/ $SiO_2$ - 7.53 and 37.90 respectively.

The calculationa based on material balance equations go to show that for obtaining one ton of flux, a charge should contain (in kg):

| | |
|---|---|
| dump sludge | 528 |
| scale | 323 |
| limeatone/dolomite mixture (1:1 ratio) | 210 |
| coke | 50 |

The calculation of the total concentration of $SiO_2$ and the $Fe_{total}$/ $SiO_2$ in the iron-containing part of charge gives the values of 4.79 and 12.26%, respectively.

Flux obtainable by an agglomerating process in sintering a charge has mechanical strength as to the yield of fractions (+5) 86%, reductibility 43%, softening temperature range $\Delta T$ 70°C.

TABLE 2

| Blast furnace charge composition | | | |
|---|---|---|---|
| Method | Charge composition | Specific consumption kg/t | Charge components content, % |
| Usable method | Lumpy ore | 438 | 24.6 |
| | Gubkin sinter | 342 | 19.3 |
| | Mihailovsk pellets | 997 | 56.1 |
| | Limestone | 235 | |
| | Dolomite | 165 | |
| | Iron content in iron ore part of charge,% | 56.61 | |
| | Dry coke | 670 | |
| | Slag basicity | 1.05 | |
| Claimed method | Mihailovsk pellets | 1231.3 | 70 |
| | Complex flux | 527.7 | 30 |
| | Iron content in iron ore part of charge | 57.41 | |
| | Dry coke | 600 | |
| | Slag basicity | 1.05 | |

Tests conducted under production conditions (Table 2) show that the use of obtainable ferrite-calcium flux, as a component of blast-furnace charge, regulating the bacisity of blast-furnace slag allowed to increase the content of nonfluxed pellets in the charge up to 70% and to obtain the required bacisity of slag without adding limestone. Also, an iron content in ore part of charge increased by 0.9 absolute %, the specific consumption of ore part of charge dropped from 1.777 to 1.759 t/t of pig iron, coke consumption diminished by 70 kg/t of pig iron.

**Claims**

1. Ferrite-calcium flux consisting of the oxides of iron, silicon, calcium, magnesium and other elements included in iron-ore material, characterized in that flux has a composition whose stoichiometric coefficient $\rho$ is 0.75 - 0.82, its chemical equivalent $\Delta e$ is (-4.1) - (-1.92), with a $SiO_2$ content in flux is varied from 1 to 7 wt%.

2. Flux according to claim 1, characterized in that $\rho$ is in the range of between [0.78 and 0.82] and $\Delta e$ is within the range [(-4.1) - (-3.8)].

3. Flux according to claim 1, characterized in that $\rho$ is in the range of between [0.75 and 0.78] and $\Delta e$ is within the range [(-2.2) - (-1.92)].

4. Flux according to claim 3, characterized in that $Fe_{total}$ contained therein exceeds 50% and $CaO/Fe_2O_3$.is 0.15 - 0.55.

5. Charge for obtaining ferrite-calcium flux, being comprised of iron-containing wastes or a mixture of wastes of metallurgical conversion, calcium-containing material, magnesium-containing material and fuel, characterized in that the iron-containing waste or the mixture thereof are represented by waste materials wherein the sum total of $Fe_{total}/SiO_2$ is not less than 11 and a $SiO_2$ content in the range of from 0.5 to 5 wt%.

6. The use of flux according to claim 2,as a slag-forming component in a converter process.

7. The use of flux according to claim 2, as a regulator of the bacisity of blast-furnace slag during a blast-furnace smelting operation.

8. The use of flux in which $CaO/Fe_2O_3$ is 0.15 - 0.55, with the contained $SiO_2$ therein being from I to 7% and $Fe_{total}$ is greater than 50%, as a slag-forming component during a blast-furnace smelting operation

## INTERNATIONAL SEARCH REPORT

| | International application No |
|---|---|
| | **PCT/RU 97/00385** |

**A. CLASSIFICATION OF SUBJECT MATTER**

IPC$^6$    C22B 1/16, C21C 5/06, C21B 5/04

According to International Patent Classification (IPC) or to both national classification and IPC

**B. FIELDS SEARCHED**

Minimum documentation searched (classification system followed by classification symbols)

IPC$^6$    C21B 5/04, C21C 5/06, 5/28, 5/36, 5/54, C22B 1/00, 1/14, 1/245

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | SU 834142 A (LIPETSKY POLITEKHNICHESKY INSTITUT) 31 May 1981 (31.05.81) | 1-4,5,6 |
| A | SU 834166 A (ZHDANOVSKY METALLURGICHESKY INSTITUT) 6 June 1981 (06.06.81) | 1-4,5,6 |
| A | US 3519471 A (MCDOWELL-WELLMAN ENGINEERING COMPANY) 7 July 1970 (07.07.70) | 1-4,5,6,7,8 |
| A | US 3649248 A (YAWATA IRON & STEEL CO. LTD.) 14 March 1972 14.03.70) | 1-4,5,6 |
| A | US 3864120 A (HELMUT KNUPPEL et al) 4 February 1975 (04.02.75) | 1-4,5,6,7,8 |
| A | GB 1406608 A (STEETLEY (MFG) LIMITED) 17 September 1975 (17.09.75) | 1-4,5,6 |
| A | FR 2034622 A (REPUBLIC STEEL CORPORATION) 11 December 1970 (11.12.70) | 1-4,5,6,7,8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 2 March 1998 (02.03.98) | 17 March 1998 (17.03.98) |

| Name and mailing address of the ISA/ <br><br> RU <br> Facsimile No | Authorized officer <br><br><br> Telephone No. |
|---|---|

Form PCT/ISA/210 (second sheet) (July 1992)

EP 1 002 881 A1

## INTERNATIONAL SEARCH REPORT

International application No.

PCT/RU 97/00385

C (Continuation)    DOCUMENTS CONSIDERED TO BE RELEVANT

| Category* | Citation of document, with indication, where appropriate, of the relevant passages | Relevant to claim No. |
|---|---|---|
| A | Referationy zhurnal "Metallurgya", 1981 No 2, Moscow, VINITI, page 26, column 2, the abstract 2V 182 P | 1-4,5,6 |

Form PCT/ISA/210 (continuation of second sheet) (July 1992)

11